# FASCICULE DE BREVET EUROPEEN

(11) **EP 3 001 161 B1**
(45) Date de publication et mention de la délivrance du brevet: **14.11.2018**
(21) Numéro de dépôt: 15172867.2
(22) Date de dépôt: 19.06.2015
(51) Int. Cl.: G01H 1/00

(54) **DISPOSITIF DE SURVEILLANCE VIBRATOIRE D'UNE MACHINE**
VORRICHTUNG ZUR ÜBERWACHUNG DER VIBRATIONEN EINER MASCHINE
VIBRATING MONITORING DEVICE OF A MACHINE

(30) Priorité: 27.06.2014 FR 1456059
(43) Date de publication de la demande: 30.03.2016
(73) Titulaire: Anticipation et Maintenance, 13124 Peypin (FR)
(72) Inventeur: Duchamp, Guy, 13124 Peypin (FR)
(74) Mandataire: Chevalier, Renaud Philippe

(56) Documents cités:
- US-A- 3 526 128
- US-A- 4 016 752
- US-A- 5 421 506
- US-A- 6 006 164

## Description

La présente invention se rapporte à un dispositif de surveillance vibratoire d'une machine.

Le domaine technique de l'invention est celui du contrôle des bruits et vibrations émis par des machines.

La présente invention concerne plus particulièrement un dispositif permettant de surveiller des vibrations de machines dues notamment à l'état de palier ou butée à roulement, et plus particulièrement de quantifier en continu des signaux émis par des organes essentiels de la machine.

Un tel dispositif permet ainsi, partant d'un état de référence, d'observer et quantifier une dérive vibratoire traduisant une dégradation d'un organe de la machine. Ainsi, ce dispositif permet d'éviter la détérioration en suscitant une opération de maintenance précoce, avant qu'il y ait dégradation mécanique (défaut de lubrification, entrée d'eau dans un palier, desserrage d'une fixation, etc.).

Il est ainsi connu de la demande internationale WO 92/01909 de concevoir un dispositif de surveillance vibratoire comportant un transducteur du type microphone qui est monté fixement sur un support, le support présentant une extrémité supérieure dans laquelle est prévu un alésage et une extrémité inférieure opposée pourvue de moyens de fixation amovible du support sur la machine, le transducteur étant logé à l'intérieur dudit alésage.

Dans ce document WO 92/01909, le transducteur (ou microphone) est fixé dans l'alésage du support au moyen d'une colle type cyanoacrylate ou époxyde. Or, la Demanderesse a observé que cette fixation par collage nuisait à la sensibilité du dispositif de surveillance vibratoire ; la sensibilité du transducteur pouvant varier dans un rapport important à cause des incertitudes de la liaison par collage, et donc de la transmission du signal vibratoire entre le support et le transducteur. Ce collage conduisait ainsi à des rebuts non négligeables pour cause de sensibilité insuffisante du dispositif de surveillance vibratoire fini, après passage des tests.

Il est également connu du document US 6 006 164 d'employer un un dispositif de surveillance de vibrations portable comprenant un corps creux à l'extrémité duquel est montée une sonde présentant une extrémité inférieure destinée à être au contact de la machine, et un transducteur fixé sur l'extrémité supérieure de la sonde. Le transducteur est soit fixé sur l'extrémité supérieure de la sonde au moyen d'une vis plaquant le tranducteur sur un plateau, soit posé à l'intérieur d'un alésage prévu sur l'extrémité supérieure de la sonde avec le transducteur en appui sur tout le fond de l'alésage. Dans ces deux réalisations, le maintien du transducteur sur la sonde n'est pas adapté pour garantir une sensibilité optimale.

La présente invention a pour but de résoudre ces inconvénients, en proposant un dispositif de surveillance vibratoire à la sensibilité améliorée et répétable.

A cet effet, elle propose un dispositif de surveillance vibratoire d'une machine, comportant un support (2), un organe de blocage (4) et un transducteur du type microphone monté fixement sur le support, ledit support présentant une extrémité supérieure dans laquelle est prévu un alésage et une extrémité inférieure opposée pourvue de moyens de fixation amovible dudit support sur la machine, ledit transducteur étant logé à l'intérieur dudit alésage, le dispositif étant remarquable en ce que le transducteur présente une face inférieure en appui plan sur un épaulement interne prévu à l'intérieur de l'alésage, et une face supérieure en appui sur l'organe de blocage fixé sur l'extrémité supérieure du support.

Ainsi, la liaison qui assure le transfert des signaux vibratoires du support au transducteur est une liaison purement mécanique, sans collage, qui se fait par un double appui plan entre les faces inférieure et supérieure du transducteur, en appui entre un épaulement de l'alésage du support et l'organe de blocage. De cette manière, la pression de contact est maîtrisée et la fonction de transfert constante, d'une fabrication à une autre.

De manière avantageuse, l'organe de blocage est fixé de manière amovible sur l'extrémité supérieure du support, pour permettre un montage/démontage aisé du transducteur.

Selon une caractéristique, l'organe de blocage présente un premier manchon pourvu d'un orifice interne fileté coopérant par vissage avec un filetage externe prévu sur l'extrémité supérieure du support, et d'une paroi interne percée et venant en appui contre la face supérieure du transducteur.

Ainsi, l'organe de blocage est fixé par vissage sur le support, et sa paroi interne forme l'appui plan pour la face supérieure du transducteur. Cette paroi interne est par ailleurs percée pour permettre le passage de câbles électriques reliés au transducteur.

Selon une autre caractéristique, l'organe de blocage présente un second manchon prolongeant le premier manchon au-delà de la paroi interne.

Ce second manchon est avantageux pour permettre le positionnement centré d'un tube de protection des câbles électriques.

Selon une possibilité de l'invention, l'organe de blocage est une pièce de révolution et le second manchon présente un diamètre externe inférieur au diamètre externe du premier manchon.

Selon une autre possibilité de l'invention, le dispositif comprend en outre un tube emmanché sur le second manchon, ledit tube étant prévu pour le passage de câbles électriques reliés au transducteur.

Dans une réalisation particulière, l'alésage du support est prolongé, après l'épaulement, par une chambre de diamètre réduit par rapport à l'alésage.

La Demanderesse a en effet constaté que la présence d'une telle chambre de diamètre réduit en avant du transducteur, augmente la sensibilité du dispositif de surveillance vibratoire.

Conformément à d'autres caractéristiques avantageuses de l'invention, prises seules ou en combinaison :
- la chambre présente un volume compris entre 60 et 350 mm³ ;
- la chambre présente une profondeur comprise entre 5 et 20 millimètres, de préférence entre 8 et 16 millimètres ;
- la chambre présente un diamètre compris entre 2 et 6 millimètres, de préférence entre 3 et 4 millimètres ;
- la chambre présente un volume supérieur ou égal au volume de l'alésage.

La Demanderesse a constaté que la sensibilité générale du dispositif de surveillance vibratoire suit une tendance à l'augmentation avec la profondeur de la chambre, et cette amélioration est encore plus marquée en hautes fréquences avec un gain qui va de +9 dB vers 3 kHz à +15 dB vers 7 kHz. Cela est d'autant plus avantageux qu'il est connu que les prémices de dégradation apparaissent dans les hautes fréquences, les défauts de graissage induisant des signaux vibratoires à partir de quelques kHz.

D'autres caractéristiques et avantages de la présente invention apparaîtront à la lecture de la description détaillée ci-après, d'un exemple de mise en oeuvre non limitatif, faite en référence aux figures annexées dans lesquelles :
- les figures 1 et 2 sont des vues schématiques de côté de deux dispositifs de surveillance vibratoire conformes à l'invention ;
- la figure 3 est une vue schématique, à échelle agrandie et en coupe partielle, d'une partie d'un dispositif de surveillance vibratoire conforme à l'invention, illustrant le montage du transducteur à l'intérieur du support ;
- la figure 4 illustre deux courbes de variation de la sensibilité du dispositif en fonction de la fréquence, pour deux profondeurs distinctes de la chambre.

En référence aux figures, un dispositif de surveillance vibratoire 1 conforme à l'invention comporte un support 2 réalisé sous la forme d'un corps allongé rigide, réalisé notamment en matériau ou alliage métallique.

Ce support 2 se présente notamment sous la forme d'un barreau ou d'une barre longiligne réalisé d'un seul tenant.

Le support 2 présente deux extrémités opposées, à savoir une extrémité inférieure 20 conformées pour être fixée de manière amovible sur la machine (non illustrée), et une extrémité supérieure 21.

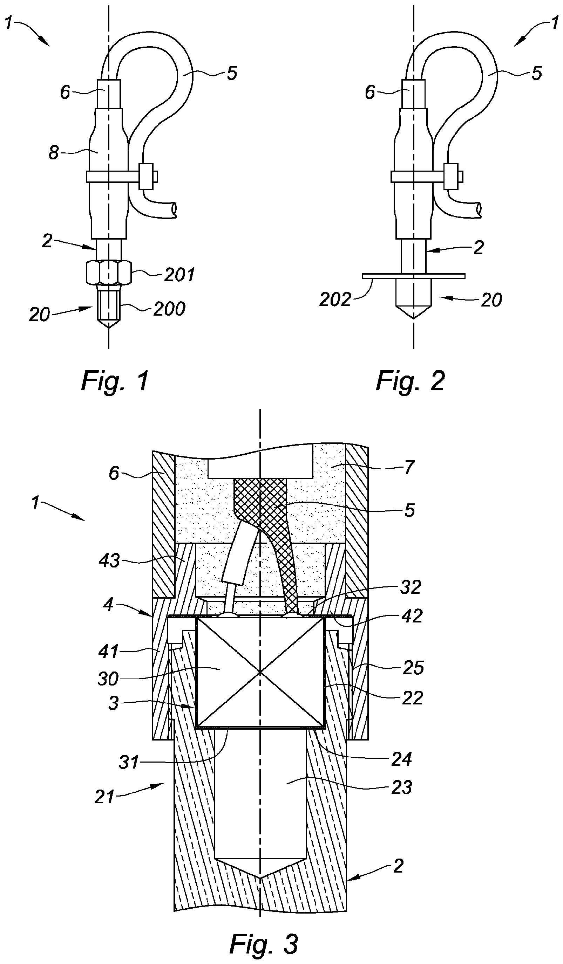

Comme visible sur les figures 1 et 2, l'extrémité inférieure 20 du support 2 est ainsi pourvue de moyens de fixation amovible du support 2 sur la machine, qui peuvent par exemple être réalisées sous la forme d'un filetage externe 200 associé à un écrou 201 dans l'exemple de la figure 1 pour une fixation par vissage sur la machine, ou d'une bride de fixation 202 dans l'exemple de la figure 2, ou d'un alésage fileté, ou d'un système d'encliquetage.

Comme visible sur la figure 3, l'extrémité supérieure 21 est pourvue d'un alésage 22 cylindrique de diamètre D1, prolongé dans son fond par une chambre 23 cylindrique de diamètre D2 inférieur à D1 ; un épaulement 24 interne étant ainsi prévu à l'intérieur de l'alésage 22, et plus spécifiquement au fond de l'alésage 22, cet épaulement 24 étant en forme de couronne de diamètre externe D1 et de diamètre interne D2.

L'alésage 22 présente une profondeur H1, et la chambre 23 une profondeur H2.

L'alésage 42 présente une profondeur H1 comprise entre 4 et 8 millimètres, et un diamètre D1 compris entre 4 et 8 millimètres.

La chambre présente une profondeur H2 comprise entre 5 et 20 millimètres, de préférence entre 8 et 16 millimètres et un diamètre D2 compris entre 2 et 6 millimètres, de préférence entre 3 et 4 millimètres.

Le dispositif de surveillance vibratoire 1 comporte également un transducteur 3 réalisé sous la forme d'un microphone, et notamment d'un microphone à condensateur à électret, qui délivre en sortie un signal électrique (notamment du type signal analogique) représentatif des vibrations.

Ce transducteur 3 comporte un boitier 30 de forme générale sensiblement cylindrique d'axe principal donné, à l'intérieur duquel sont fixés par leur pourtour, rigidement, deux armatures d'un condensateur à électret.

Ce boîtier 30 présente une hauteur H3 selon l'axe principal et un diamètre D3 sensiblement équivalent au diamètre D1 de l'alésage 22, au jeu de montage près ; autrement dit D3 est sensiblement inférieur à D2.

Le boîtier 30 présente une face inférieure 31, une face supérieure 32 et une face périphérique cylindrique reliant les deux faces inférieure et supérieure 31, 32.

Le transducteur 3 est logé à l'intérieur de l'alésage 22 jusqu'à venir en butée contre l'épaulement 24, et plus spécifiquement jusqu'à ce que la face inférieure 31 du boîtier 30 soit en appui plan sur l'épaulement 24 prévu à l'intérieur de l'alésage 22.

La hauteur H3 du transducteur 3 est supérieure à la profondeur H1 de l'alésage 22, de sorte que le transducteur 3 dépasse hors de l'alésage 22 une fois le transducteur 3 en butée contre l'épaulement 24.

Le dispositif de surveillance vibratoire 1 comporte également un organe de blocage 4 conformé pour maintenir le transducteur 3 en place à l'intérieur de l'alésage 22 et en appui contre l'épaulement 24.

A cet effet, l'organe de blocage 4 est fixé sur l'extrémité supérieure 21 du support 2 tout en venant en appui contre la face supérieure 32 du boîtier 30. Ainsi, le transducteur 3 est bloqué entre l'épaulement 24 et l'organe de blocage 4, avec des appuis plan à la fois de ses faces inférieure et supérieure 31, 32 sur respectivement l'épaulement 24 et l'organe de blocage 4.

L'organe de blocage 4 est constitué d'une pièce de révolution fixée par vissage sur l'extrémité supérieure 21 du support 2. Ainsi, cette extrémité supérieure 21 présente un filetage externe 25, et l'organe de blocage 4 comporte un premier manchon 41 pourvu d'un orifice interne fileté coopérant par vissage avec ce filetage externe 25.

L'organe de blocage 4 présente également une paroi interne 42 percée, formant le fond de l'orifice interne fileté du premier manchon 41, où cette paroi interne 42 vient en appui contre la face supérieure 32 du transducteur 3, après un vissage suffisant du premier manchon 41 sur le filetage externe 25 de l'extrémité supérieure 21 du support 2. La paroi interne 42 est percée pour permettre le passage de câbles électriques 5, et en particulier de deux fils conducteurs 5 raccordés à des contacts électriques prévus sur la face supérieure 32 du transducteur 3.

L'organe de blocage 4 présente également un second manchon 43 prolongeant le premier manchon 41 au-delà de la paroi interne 42.

Ce second manchon 43 présente un diamètre externe inférieur au diamètre externe du premier manchon 41, et un tube 6 est emmanché sur ce second manchon 43 ; ce tube 6 étant prévu pour le passage et la protection des câbles électriques 5.

En outre, le second manchon 43 et le tube 6 sont remplis d'une résine de blocage 7, tel qu'une résine époxyde.

Une gaine 8 souple peut éventuellement entourer le tube 6, l'organe de blocage 4 et la partie supérieure du support 2.

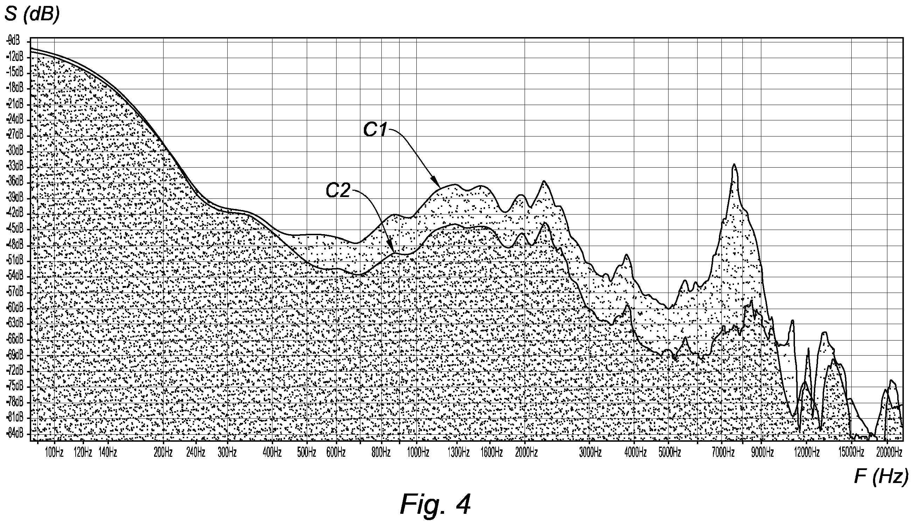

La figure 4 illustre la variation de la sensibilité S (en décibels dB) en fonction de la fréquence F (en hertz Hz), dans la cas d'un dispositif 1 comprenant un boîtier 30 de transducteur 3 ayant un diamètre D3 de 6 millimètres, un support 2 présentant un alésage 22 de diamètre D1 de 6 millimètres (au jeu de montage près du transducteur 3), et une chambre 23 de diamètre D2 de 4 millimètres.

La première courbe C1 illustre une telle variation pour une première configuration dans laquelle la chambre 23 présente une profondeur H2 de 19 millimètres, tandis que la seconde courbe C2 illustre une telle variation pour une seconde configuration dans laquelle la chambre 23 présente une profondeur H2 de 5 millimètres.

En comparant ces deux courbes C1, C2, il est noté que la sensibilité S générale est améliorée et augmente avec la profondeur H2 de la chambre 23, l'amélioration étant encore plus marquée dans les hautes fréquences avec un gain qui va de +9 dB vers 3 kHz jusqu'à un gain de +15 dB vers 7 kHz.

Cette augmentation de la sensibilité aux hautes fréquences, au-delà de 1 kHz environ, est d'autant plus avantageuse qu'il est observé que les prémices de dégradation des paliers de roulement se détectent dans les hautes fréquences, car les défauts de graissage induisent des signaux vibratoires à partir de quelques kHz.

Bien entendu l'exemple de mise en oeuvre évoqué ci-dessus ne présente aucun caractère limitatif et d'autres améliorations et détails peuvent être apportés au dispositif selon l'invention, sans pour autant sortir du cadre de l'invention où d'autres formes de moyens de fixation amovible peuvent par exemple être réalisées.

A titre d'exemple, la chambre 23 peut présenter d'autres formes et/ou dimensions, et surtout présenter un volume intérieur supérieur aux exemples donnés ci-dessus, dans le but d'augmenter encore la sensibilité du dispositif 1.

## Revendications

1. Dispositif (1) de surveillance vibratoire d'une machine, comportant un support (2), un organe de blocage (4) et un transducteur (3) du type microphone monté fixement sur le support (2), ledit support (2) présentant une extrémité supérieure (21) dans laquelle est prévu un alésage (22) et une extrémité inférieure (20) opposée pourvue de moyens de fixation amovible (200, 201 ; 202) dudit support (2) sur la machine, ledit transducteur (3) étant logé à l'intérieur dudit alésage (22), le dispositif (1) étant **caractérisé en ce que** le transducteur (3) présente une face inférieure (31) en appui plan sur un épaulement (24) interne prévu à l'intérieur de l'alésage (22), et une face supérieure (32) en appui sur l'organe de blocage (4) fixé sur l'extrémité supérieure (21) du support (2).

2. Dispositif (1) selon la revendication 1, dans lequel l'organe de blocage (4) est fixé de manière amovible sur l'extrémité supérieure (21) du support (2).

3. Dispositif (1) selon la revendication 2, dans lequel l'organe de blocage (4) présente un premier manchon (41) pourvu d'un orifice interne fileté coopérant par vissage avec un filetage externe (25) prévu sur l'extrémité supérieure (21) du support (2), et d'une paroi interne (42) percée et venant en appui contre la face supérieure (32) du transducteur (3).

4. Dispositif (1) selon la revendication 3, dans lequel l'organe de blocage (4) présente un second manchon (43) prolongeant le premier manchon (41) au-delà de la paroi interne (42).

5. Dispositif (1) selon la revendication 4, dans lequel l'organe de blocage (4) est une pièce de révolution et le second manchon (43) présente un diamètre externe inférieur au diamètre externe du premier manchon (41).

6. Dispositif (1) selon les revendications 4 ou 5, comprenant en outre un tube (6) emmanché sur le second manchon (43), ledit tube (6) étant prévu pour le passage de câbles électriques (5) reliés au transducteur (3).

7. Dispositif (1) selon l'une quelconque des revendications précédentes, dans lequel l'alésage (22) du support (2) est prolongé, après l'épaulement (24), par une chambre (23) de diamètre (D2) réduit par rapport à l'alésage (22).

8. Dispositif (1) selon la revendication 7, dans lequel la chambre (23) présente un volume un volume supérieur ou égal au volume de l'alésage (22), et notamment un volume compris entre 60 et 350 mm³.

9. Dispositif (1) selon les revendications 7 ou 8, dans lequel la chambre (23) présente une profondeur (H2) comprise entre 5 et 20 millimètres, de préférence entre 8 et 16 millimètres.

10. Dispositif (1) selon l'une quelconque des revendications 7 à 9, dans lequel la chambre (23) présente un diamètre (D2) compris entre 2 et 6 millimètres, de préférence entre 3 et 4 millimètres.

## Patentansprüche

1. Vorrichtung (1) zur Schwingungsüberwachung einer Maschine, umfassend einen Halter (2), ein Verriegelungsglied (4) und einen Wandler (3) vom Typ Mikrophon, der fest am Halter (2) montiert ist, wobei der Halter (2) ein oberes Ende (21) aufweist, in dem eine Bohrung (22) vorgesehen ist, und ein gegenüberliegendes unteres Ende (20), das mit Mitteln zum entfernbaren Befestigen (200, 201; 202) des Halters (2) an der Maschine versehen ist, wobei der Wandler (3) in Inneren der Bohrung (22) untergebracht ist, wobei die Vorrichtung (1) **dadurch gekennzeichnet ist, dass** der Wandler (3) eine untere Fläche (31) in ebener Anlage an einer Innenschulter (24) aufweist, die im Inneren der Bohrung (22) vorgesehen ist, und eine obere Fläche (32) in Anlage am Verriegelungsglied (4), das am oberen Ende (21) des Halters (2) befestigt ist.

2. Vorrichtung (1) nach Anspruch 1, wobei das Verriegelungsglied (4) in entfernbarer Weise am oberen Ende (21) des Halters (2) befestigt ist.

3. Vorrichtung (1) nach Anspruch 2, wobei das Verriegelungsglied (4) eine erste Muffe (41) aufweist, die versehen ist mit einem Innengewindeloch, das durch Schrauben mit einem am oberen Ende (21) des Halters (2) vorgesehenen Außengewinde (25) zusammenwirkt, und mit einer Innenwand (42), die durchbrochen ist und gegen die obere Fläche (32) des Wandlers (3) in Anlage kommt.

4. Vorrichtung (1) nach Anspruch 3, wobei das Verriegelungsglied (4) eine zweite Muffe (43) aufweist, die die erste Muffe (41) über die Innenwand (42) hinaus verlängert.

5. Vorrichtung (1) nach Anspruch 4, wobei das Verriegelungsglied (4) ein Drehteil ist und die zweite Muffe (43) einen Außendurchmesser aufweist, der kleiner ist als der Außendurchmesser der ersten Muffe (41).

6. Vorrichtung (1) nach den Ansprüchen 4 oder 5, die weiter ein an der zweiten Muffe (43) angemufftes Rohr (6) umfasst, wobei das Rohr (6) für die Durchführung von elektrischen Kabeln (5) vorgesehen ist, die mit dem Wandler (3) verbunden sind.

7. Vorrichtung (1) nach einem der vorstehenden Ansprüche, wobei die Bohrung (22) des Halters (2) nach der Schulter (24) von einer Kammer (23) verlängert wird, die in Bezug auf die Bohrung (22) von reduziertem Durchmesser (D2) ist.

8. Vorrichtung (1) nach Anspruch 7, wobei die Kammer (23) ein Volumen aufweist, ein Volumen, das größer oder gleich dem Volumen der Bohrung (22) ist, und insbesondere ein Volumen im Bereich zwischen 60 und 350 mm³.

9. Vorrichtung (1) nach den Ansprüchen 7 oder 8, wobei die Kammer (23) eine Tiefe (H2) im Bereich zwischen 5 und 20 Millimeter, vorzugsweise zwischen 8 und 16 Millimeter aufweist.

10. Vorrichtung (1) nach einem der Ansprüche 7 bis 9, wobei die Kammer (23) einen Durchmesser (D2) im Bereich zwischen 2 und 6 Millimeter, vorzugsweise zwischen 3 und 4 Millimeter aufweist.

## Claims

1. A device (1) for vibration monitoring of a machine, including a support (2), a blocking member (4) and a microphone-type transducer (3) fixedly mounted on the support (2), said support (2) having an upper end (21) in which a bore (22) is provided and an opposite lower end (20) provided with means (200, 201; 202) for removably fastening said support (2) on the machine, said transducer (3) being housed inside said bore (22), the device (1) being **characterized in that** the transducer (3) has a lower face (31) bearing in a planar manner on an inner shoulder (24) provided inside the bore (22), and an upper face (32) bearing on the blocking member (4) fastened on the upper end (21) of the support (2).

2. The device (1) according to claim 1, wherein the blocking member (4) is removably fastened on the upper end (21) of the support (2).

3. The device (1) according to claim 2, wherein the blocking member (4) has a first sleeve (41) provided with a threaded inner orifice cooperating by screwing with an outer thread (25) provided on the upper end (21) of the support (2), and with an inner wall (42) which is pierced and bears against the upper face (32) of the transducer (3).

4. The device (1) according to claim 3, wherein the blocking member (4) has a second sleeve (43) extending the first sleeve (41) beyond the inner wall (42).

5. The device (1) according to claim 4, wherein the blocking member (4) is a revolution part and the second sleeve (43) has an outer diameter smaller than the outer diameter of the first sleeve (41).

6. The device (1) according to claims 4 or 5, further comprising a tube (6) fitted onto the second sleeve (43), said tube (6) being provided for the passage of electrical cables (5) connected to the transducer (3).

7. The device (1) according to any one of the preceding claims, wherein the bore (22) of the support (2) is extended, after the shoulder (24), by a chamber (23) with a reduced diameter (D2) compared to the bore (22).

8. The device (1) according to claim 7, wherein the chamber (23) has a volume larger than or equal to the volume of the bore (22), and in particular a volume comprised between 60 and 350 mm³.

9. The device (1) according to claims 7 or 8, wherein the chamber (23) has a depth (H2) comprised between 5 and 20 millimeters, preferably between 8 and 16 millimeters.

10. The device (1) according to any one of claims 7 to 9, wherein the chamber (23) has a diameter (D2) comprised between 2 and 6 millimeters, preferably between 3 and 4 millimeters.
